# EUROPEAN PATENT APPLICATION

(11) **EP 1 356 988 A1**
(43) Date of publication of application: **29.10.2003**
(21) Application number: 02014107.3
(22) Date of filing: 24.06.2002
(51) Int. Cl.: B60R 1/00

(54) **Apparatus for monitoring rear of vehicle**

(30) Priority: 18.04.2002 KR 2002021334
(71) Applicant: KIA MOTORS CORPORATION, Seoul 137-938 (KR)
(72) Inventor: Kim, Yong-Tae, Hwansung-gun, Kyonggi-do 445-954 (KR)
(74) Representative: Viering, Jentschura & Partner

(57) **Abstract**

Disclosed is an apparatus for monitoring the rear of a vehicle capable of entirely eliminating a blind spot. The apparatus includes a camera (200) for taking a picture of a rear of the vehicle, a liquid crystal display for receiving and displaying the image, and a control section for controlling the camera (300) and the liquid crystal display. The camera (300) is installed in an auxiliary turn indicator (100) mounted on left and right front fenders of the vehicle. The turn indicator (100) includes a partition dividing a chamber into one chamber for accommodating a turn signaling lamp (200) and the other chamber for accommodating the camera (300).

## Description

### BACKGROUND OF THE INVENTION

### Field of the Invention

The present invention relates to an apparatus for monitoring the rear of a vehicle, and more particularly, to an apparatus for monitoring the rear of a vehicle by use of a digital camera outputting an image on a liquid crystal display mounted to a dashboard in a cabin, thereby eliminating exterior rearview mirrors and thus improving space application for left and right front fenders of the vehicle.

### Background of the Prior Art

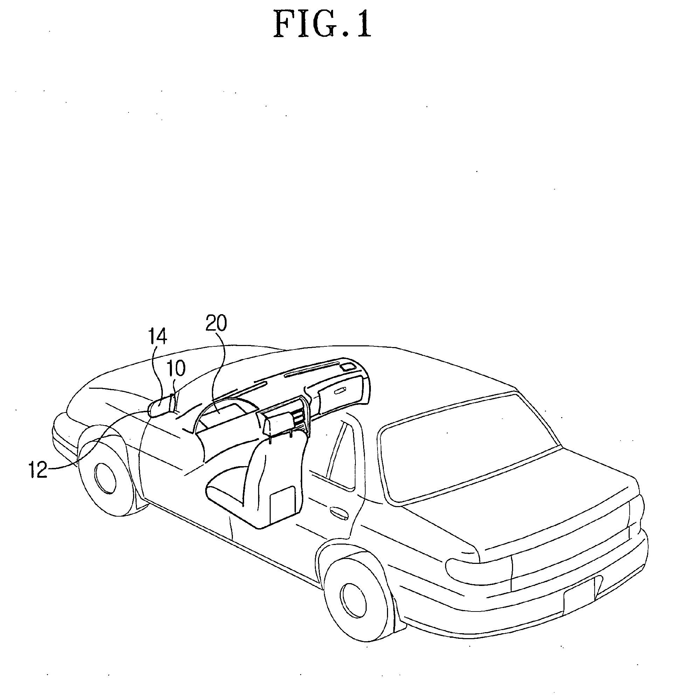

Generally, most automotive vehicles have rearview mirrors, called as sideview mirror, mounted on the exterior of front doors for enabling a driver to see vehicles approaching from the rear of the vehicle. Fig. 1 is a perspective view of a conventional rearview mirror of a vehicle. A support bracket 10 is rigidly secured to the attached portion between a casing and a window frame of the front door, and the rearview mirror 12 is installed on an upper portion of the support bracket 10. The driver can monitor the vehicles approaching from the rear through a mirror element 14 mounted in one side of the rearview mirror, so that the driver reduces a speed of the vehicle or changes a lane.

The mirror element 14 is provided on its inner surface with a pivot bearing (not shown), so that the driver can adjust an angle of rear vision to confirm to his or her body type or driving lanes (e.g., superhighway, a notional highway and so forth). These rearview mirrors fail to reflect vehicles located near the rear end of the vehicle, which is commonly referred to as "blind spots." These blind spots can hide other vehicles from the view of the driver, resulting in a collision when the driver changes lanes without turning to see if other vehicles are in the adjacent lane.

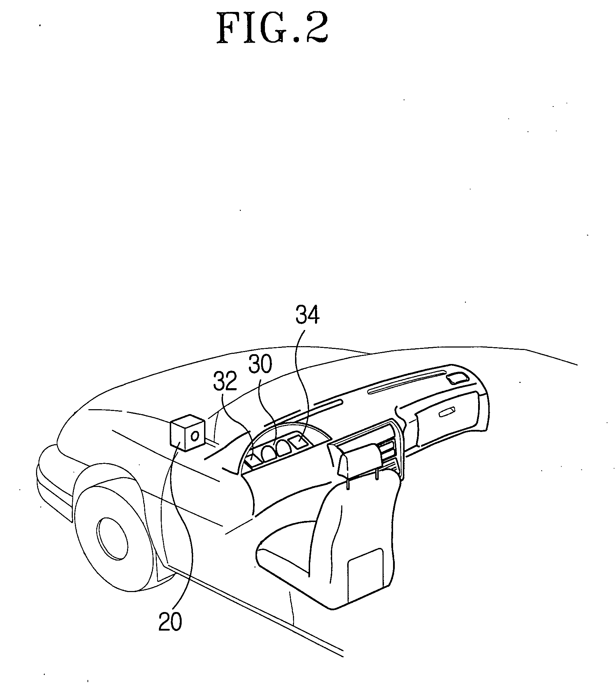

In order to address such a problem, Korean Utility-Model No. 152945 assigned to the assignee of the present invention suggests cameras for a rearview mirror each mounted on the left and right front doors of the vehicle. The camera is moved to settle the blind spot, and the scene of the collision is taken and stored by the camera. Fig. 2 is a perspective view of a conventional rear monitoring apparatus using the camera. A camera 20 for a rearview mirror is installed to a support bracket, and an image inputted from the camera 20 is outputted on liquid crystal displays 32 and 34 each mounted on a dashboard 30 in a cabin of a vehicle.

Although it is acceptable to substitute the camera for the exterior rearview mirror, since the camera is mounted on the location of the existing exterior rearview mirror, an aerodynamic noise is generated due to the exterior camera when the vehicle travels at a high speed, as well as providing the blind spot as usual.

### SUMMARY OF THE INVENTION

Accordingly, the present invention is directed to an apparatus for monitoring the rear of a vehicle that substantially obviates one or more problems due to limitations and disadvantages of the related art.

It is an object of the present invention to provide an apparatus for monitoring the rear of a vehicle capable of entirely eliminating a blind spot.

It is another object of the present invention to provide an apparatus for monitoring the rear of a vehicle, in which rearview mirrors are eliminated to reduce an aerodynamic noise and improve a layout of left and right front side of the vehicle.

In order to accomplish the above objects, the present invention provides an apparatus for monitoring a rear of a vehicle, the apparatus including a camera for taking a picture of a rear of the vehicle, a liquid crystal display for receiving and displaying the image, and a control section for controlling the camera and the liquid crystal display, the apparatus comprising an auxiliary turn indicator, mounted on left and right front fenders of the vehicle, for accommodating the camera.

The turn indicator includes a partition dividing a chamber into one chamber for accommodating a turn signaling lamp and the other chamber for accommodating the camera.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

Fig. 1 is a perspective view of a conventional rearview mirror of a vehicle;

Fig. 2 is a perspective view of a conventional rear monitoring apparatus using a camera;

Fig. 3 is a view illustrating a vehicle employing an apparatus for monitoring the rear according to a preferred embodiment of the present invention;

Fig. 4 is a view illustrating the structure of a corner indicator accommodating a camera for monitoring the rear of a vehicle;

Fig. 5 is a plan view of a vehicle, which depicts a filed of view of a camera; and

Fig. 6 is a block diagram showing the construction of an apparatus for monitoring the rear of the vehicle in Fig. 3.

### DETAILED DESCRIPTION OF THE PREFERRED EMBODIMENTS

Reference will now be made in detail to a preferred embodiment of the present invention.

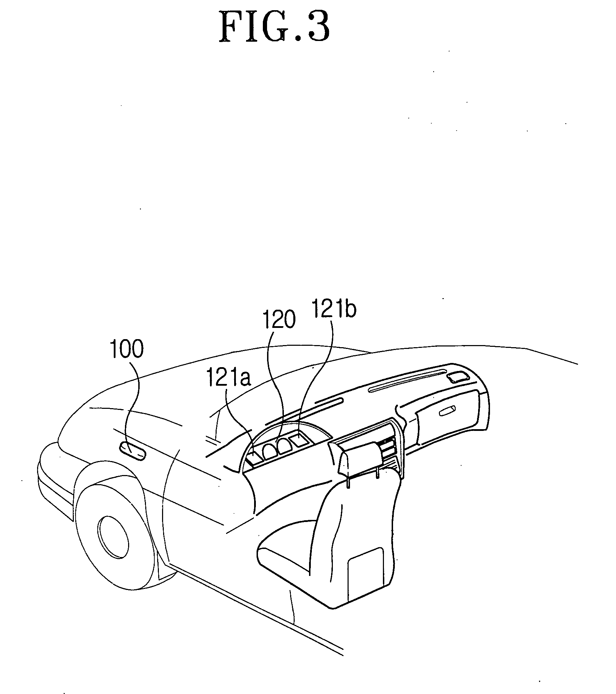

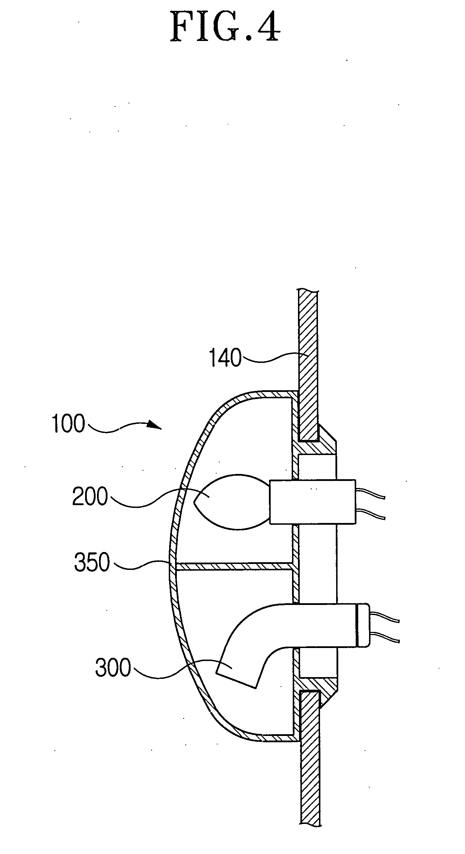

Fig. 3 is a view illustrating a vehicle employing an apparatus for monitoring the rear according to a preferred embodiment of the present invention, and Fig. 4 is a view illustrating the structure of a turn indicator accommodating a camera for monitoring the rear of a vehicle.

Referring to Figs 3 and 4, auxiliary turn indicators 100 are mounted on left and right front fenders 140 of a vehicle. Liquid crystal displays 121a and 121b are installed to both side ends of a dashboard 120, so that a driver can monitor vehicles approaching from the rear of the vehicle, while seeing the front of the vehicle.

The auxiliary turn indicator 100 includes a turn signaling lamp 200 for indicating a turn of the vehicle, a camera 300 for taking a picture of the vehicle's rear, and a protective cover 350 having a partition dividing a chamber into one chamber for accommodating the turn signaling lamp 200 and the other chamber for accommodating the camera 300. The camera 300 may be set and installed at an optimum angle for enabling the driver to monitor circumstances adjacent to the rear of the vehicle, or include an angle adjusting motor for adjusting an angle of the camera in all directions. The protective cover 350 for covering the turn signaling lamp 200 and the camera 300 is made of a transparent material so that the camera 300 can take a clear picture of the vehicle's rear.

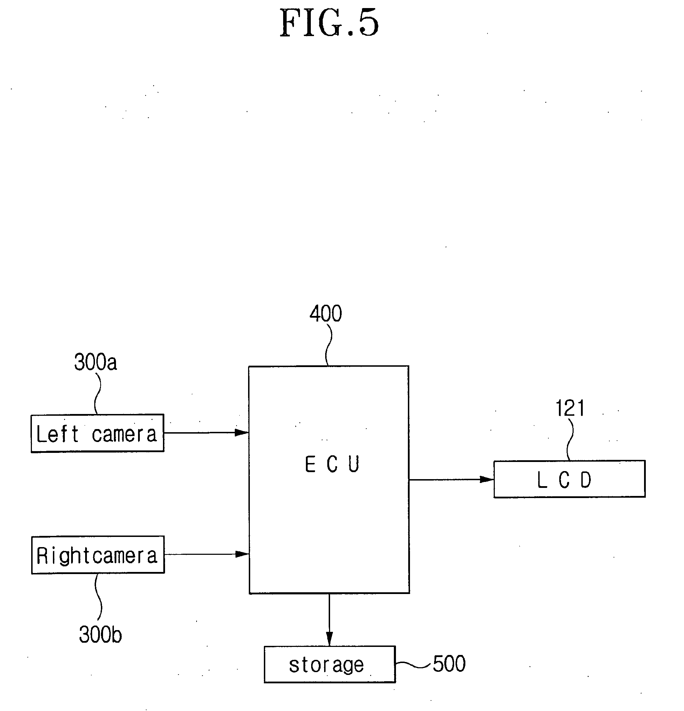

Fig. 5 is a plan view of the vehicle, which depicts a filed of view of the camera in Fig. 3. A horizontal angle of view, indicated by a reference character A, of the camera 300 from the auxiliary turn indicator 100 is determined as a half of the total horizontal angle, indicated by a reference character B, of view of the camera. Preferably, the horizontal angle of view A of the camera is within a range of 25 to 30 degrees relative to a chassis. Accordingly, the driver can see the blind spot C, which is not provided by the conventional exterior rearview mirror.

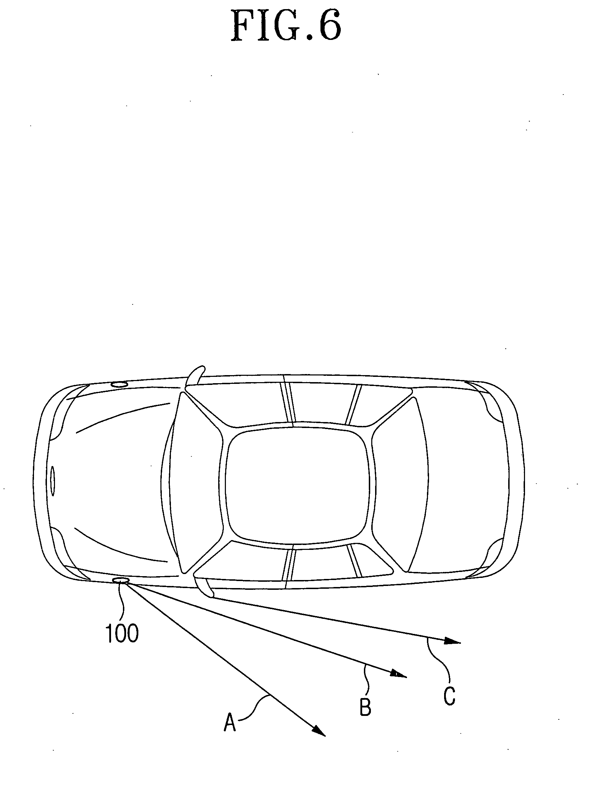

Fig. 6 is a block diagram showing the construction of an apparatus for monitoring the rear of the vehicle in Fig. 3.

Referring to Fig. 6, cameras 300a and 300b are installed in auxiliary turn indicators which are mounted on left and right front fenders of a vehicle. Images taken by the cameras 300a and 300b are transmitted to a control section 400 in a digital signal. The control section 400 outputs the image data on a liquid crystal display 121, so that the driver can monitor the image data. The control section 400 may further comprise storing means 500 for storing the inputted image data.

With the construction described above, the present invention has some advantages of reducing an aerodynamic noise and improving a layout of the front fender of the vehicle, by eliminating the rearview mirrors.

In addition, there are provided other advantages in that the blind spot can be entirely eliminated, thereby preventing a fender bender, and that when moving or parking the vehicle can be traveled on a narrow road corresponding to a width exclusive of both rearview mirrors.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. An apparatus for monitoring a rear of a vehicle, the apparatus including a camera for taking a picture of a rear of the vehicle, a liquid crystal display for receiving and displaying the image, and a control section for controlling the camera and the liquid crystal display, the apparatus comprising:
an auxiliary turn indicator, mounted on left and right front fenders of the vehicle, for accommodating the camera.

2. The apparatus as claimed in claim 1, wherein the turn indicator includes a partition dividing a chamber into one chamber for accommodating a turn signaling lamp and the other chamber for accommodating the camera.
